# EUROPÄISCHE PATENTSCHRIFT

(11) **EP 0 849 139 B1**
(45) Veröffentlichungstag und Bekanntmachung des Hinweises auf die Patenterteilung: **03.09.2003**
(21) Anmeldenummer: 97119407.1
(22) Anmeldetag: 06.11.1997
(51) Int. Cl.: B62B 1/04

(54) **Golfwagen**
Golf cart
Chariot de golf

(30) Priorität: 20.12.1996 DE 19653665
(43) Veröffentlichungstag der Anmeldung: 24.06.1998
(73) Patentinhaber: Heinrich Kipp Werk Spanntechnik + Normelemente, 72172 Sulz (DE)
(72) Erfinder: Tinz, Bernhard, 72770 Reutlingen (DE); Schanz, Hans, 72172 Sulz (DE); Lechner, Reinhard, 75177 Pforzheim (DE); Sehl, Edmund, 73257 Köngen (DE)
(74) Vertreter: Grosse, Rainer, Dipl.-Ing.

(56) Entgegenhaltungen:
- DE-U- 9 415 259
- US-A- 2 647 762
- US-A- 3 433 497
- US-A- 4 887 835
- US-A- 5 505 471

## Beschreibung

Die Erfindung betrifft einen zusammenlegbaren Golfwagen nach dem Oberbegriff des Anspruchs 1.

Golfwagen, sogenannte Caddies, der eingangs genannten Art sind bekannt. Sie dienen dazu, die schwere Golfausrüstung, insbesondere während des Spiels, aufzunehmen und zu transportieren. Die Ausrüstung wird in einem Golfsack untergebracht, der am Golfwagen befestigbar ist. Um den Golfwagen einfach und platzsparend, beispielsweise im Kofferraum eines Personenkraftwagens, mit zum Golfplatz nehmen zu können, ist er zusammenlegbar ausgebildet. Vor dem Zusammenlegen wird der Golfsack abgenommen; anschließend werden die zum Fahrgestell gehörenden Fahrgestellstreben -an denen die Räder befestigt sind- in Richtung auf ein Grundteil geklappt, so daß die Fahrgestellstreben eng am Grundteil anliegen und sich die Querschnittsabmessungen der Gesamtstruktur dadurch erheblich verkleinern. Um den Golfwagen einsatzbereit zu machen, müssen die Fahrgestellstreben von Hand ausgeklappt werden, das heißt, der Benutzer hält mit einer Hand das Grundteil und nutzt die andere Hand, um die Fahrgestellstreben in Ausstellungsposition zu verschwenken.

Aus der US 4,887,835 ist ein Golfwagen bekannt, bei dem im zusammengelegten Zustand die Räder an das Grundteil angeklappt werden. Ferner wird eine Griffstange eingefahren, wobei im eingefahrenen Zustand der Griff das Grundteil überragt. Auch bei den Gegenständen der US 2,647,762, US 3,433,497 und DE 94 15 259 Ul stellt der Griff im zusammengelegten Zustand des jeweiligen Golfwagens ein hervorstehendes und damit die Länge vergrößerndes Bauteil dar.

Der Erfindung liegt daher die Aufgabe zugrunde, einen leicht handhabbaren Golfwagen zu schaffen, bei dem im zusammengelegten Zustand eine kleine Zusammenlegstellung, insbesondere eine kurze Baulänge, vorliegt.

Diese Aufgabe wird unter Berücksichtigung der Merkmale des Oberbegriffs des Anspruchs 1 dadurch gelöst, dass das Grundteil mindestens zwei Längsträger aufweist, dass im Bereich der oberen Enden der Längsträger ein Führungsquerjoch längsverschieblich auf den Längsträgern und der Längsstange gelagert ist, und dass der Griff eine Breite aufweist, die kleiner ist, als der lichte Abstand zwischen den beiden Längsträgern, zwischen denen die Längsstange angeordnet ist. Bei dem erfindungsgemäßen Golfwagen wird durch eine einfache Schiebebewegung das Fahrgestell in Fahrbereitschaftsposition verbracht. Gleiches gilt in entsprechend umgekehrter Weise beim Zusammenlegen des Golfwagens. Wird das Verschiebeteil relativ zum Grundteil verschoben, so übt der Ausstellenker eine Schwenkkraft auf die zugehörige Fahrgestellstrebe aus, so daß sich diese -je nach Betätigungsrichtung- entweder in Richtung auf das Grundteil bewegt -so daß sich der zusammengelegte Zustand einstellt- oder aber vom Grundteil wegschwenkt -so daß die Fahrposition herbeigeführt wird. Da sich der der Handhabung des Golfwagens dienende Griff, also das Teil, an dem der Golfwagen beispielsweise über den Golfplatz gezogen beziehungsweise geschoben wird, am Verschiebeteil befindet, ist es möglich, zum Zusammenlegen beziehungsweise Entfalten mit einer Hand am Griff anzufassen und diesen dann relativ gegenüber dem Grundteil zu verlagern, so daß die erwähnte Verschiebebewegung auftritt und über den beziehungsweise die Anstellenker die Fahrgestellstreben betätigt werden. Wenn im Zuge dieser Anmeldung nur von einem Ausstellenker und auch nur von einer Fahrgestellstrebe die Rede ist, so erfolgt dies aus Vereinfachungsgründen. Der erfindungsgemäße Golfwagen weist mindestens zwei Fahrgestellstreben mit jeweils einem daran angeordneten Rad auf, wobei beiden oder zumindest einer Fahrgestellstrebe ein Ausstellenker zugeordnet ist. Ist nur ein Ausstellenker vorhanden, so betätigt dieser beide Fahrgestellstreben. Bevorzugt sind jedoch mindestens zwei Ausstellenker vorgesehen, wobei jeder eine Fahrgestellstrebe beaufschlagt. Der Griff ist an einem Ende des Verschiebeteils angeordnet. Das Grundteil weist mindestens zwei Längsträger auf, an denen das Querjoch längsverschieblich geführt ist. Sie dienen einerseits zur Abstützung des Golfsacks und haben ferner eine Führungsfunktion für das Querjoch. Das Verschiebeteil weist eine Längsstange auf, an derem einen Ende der Griff und an derem anderen Ende das Querjoch befestigt ist. Die Längsstange ist zwischen den beiden Längsträgern angeordnet, was den Vorteil hat, daß eine Betätigung der Längsstange symmetrische Kraftverhältnisse mit sich bringt, das heißt, das mittels der Längsstange verschobene Querjoch neigt bei mittiger, zwischen den Längsträgern liegenden Anordnung nicht zu einem Verkanten. Es ist vorgesehen, daß im Bereich zwischen der Lagerbrücke und den Enden der Längsträger ein Führungsquerjoch längsverschieblich auf den Längsträgern und der Längsstange gelagert ist. Dieses Führungsquerjoch hat die Aufgabe, die Parallelität der Längsträger sowie der Längsstange untereinander bei jeder beliebigen Auszugsstellung sicherzustellen. Durch die erwähnten Merkmale ist es möglich, den Griff im zusammengelegten Zustand des Golfwagens bis zwischen die Längsträger zu schieben. Hierdurch wird eine besonders kurze Zusammenlegstellung erzielt.

Ferner ist vorteilhaft, wenn das Verschiebeteil ein am Grundteil geführtes Verlagerungsteil, insbesondere ein Querjoch, aufweist, an dem der Ausstellenker gelagert ist. Wird somit das Verschiebeteil bewegt, so führt das zu einer entsprechenden Verlagerung des Querjochs, wobei das Querjoch am Grundteil verschieblich gelagert ist. Das Querjoch nimmt bei seiner Bewegung mindestens einen Ausstellenker mit, so daß dieser die Schwenkbewegung der Fahrgestellstrebe(n) vornimmt.

Die Führungsfunktion für das Querjoch wird insbesondere dadurch gebildet, daß das Querjoch Durchbrüche aufweist, die von den Längsträgern mit geringem Spiel durchgriffen werden. Damit ist das Querjoch entlang der Längsträger verschiebbar.

Die beiden Längsträger verlaufen vorzugsweise parallel mit Abstand zueinander.

Nach einer Weiterbildung der Erfindung ist vorgesehen, daß das Grundteil eine Lagerbrücke aufweist, an der die Längsträger befestigt sind und an der die Längsstange verschieblich geführt ist. Diese Führung wird bevorzugt dadurch gebildet, daß die Lagerbrücke einen Durchbruch aufweist, der von der Längsstange mit geringem Spiel durchgriffen wird.

Damit die Längsträger nicht aus den Durchbrüchen des Führungsquerjochs herausrutschen können, ist vorgesehen, daß an den Längsträgern Abschlußelemente angeordnet sind, die Anschläge für das Führungsquerjoch bilden.

Um eine möglichst kurze Zusammenlegposition realisieren zu können und ferner eine individuelle Auszugsstellung einstellen zu können, ist -nach einer Weiterbildung der Erfindung- vorgesehen, daß die Längsstange teleskopartig ausziehbar ausgebildet ist. Die jeweils gewünschte Ausziehstellung ist mittels einer Klemmeinrichtung fixierbar.

Ferner ist es vorteilhaft, wenn eine lösbare Verrastung zwischen Längsstange und Lagerbrücke vorgesehen ist. Diese Verrastung tritt in Raststellung, wenn das Fahrgestell seine Endausklapposition erreicht hat. Durch die Verrastung wird die Stabilität der Gesamtanordnung erhöht. Soll der Golfwagen zusammengeklappt werden, so wird zuvor durch einfache Entrastung die Verschiebemöglichkeit zwischen Verschiebeteil und Grundteil geschaffen.

Weiterhin ist es vorteilhaft, wenn neben der oder innerhalb der Fahrgestellstrebe ein Steuerlenker verläuft, der an dem Grundteil derart schwenkbeweglich befestigt ist, daß seine Lagerstelle nicht mit der Lagerstelle der Fahrgestellstrebe zusammenfällt und der im Bereich des zugehörigen Rads mit einem Exzenterteil zusammenwirkt, welches mit einem drehbar an der Fahrgestellstrebe gelagerten Radhalteteil verbunden ist beziehungsweise dieses aufweist, an dem eine Radachse unter einem Winkel zur Drehachse des Radhalteteil angeordnet ist. Da die Lagerstellen von Steuerlenker und Fahrgestellstrebe auseinanderfallen, das heißt, versetzt zueinander liegen, insbesondere in Längserstreckung des Grundteils versetzt zueinander liegen, erfolgt eine Relativbewegung dieser beiden Teile zueinander, wenn die Fahrgestellstrebe vom Grundteil weggeschwenkt beziehungsweise zum Grundteil hingeschwenkt wird. Diese Relativbewegung wird genutzt, um das Exzenterteil anzutreiben, wodurch eine Drehung des Radhalteteils bewirkt wird. Da die Drehachse des Radhalteteils einen Winkel mit der Radachse einschließt, erfolgt eine Schwenkbewegung des zugehörigen Rads, derart, daß es sich mit seiner rechtwinklig zur Radachse verlaufenden Radebene möglichst parallel beziehungsweise etwa parallel zur Längserstreckung des Grundteils bewegt. Hierdurch kommt das Rad in eine sehr eng anliegende Position zum Grundteil, so daß eine schmale Zusammenlegstellung erzielt ist.

Sofern der Benutzer des Golfwagens eine noch schlankere Anordnung wünscht, ist es möglich, die Räder zu lösen. Diese werden vorzugsweise mittels einer geeigneten Rasteinrichtung gehalten, so daß durch Entrasten eine Radabnahme möglich wird.

Um den Golfsack fest und positionsgenau am Fahrgestell befestigen zu können und auch ein Verrutschen zu vermeiden, ist insbesondere vorgesehen, daß die Golfsackhalterung eine mit einer Ausnehmung versehene Auflage aufweist und daß der abnehmbare Golfsack mindestens einen Standfuß besitzt, der in die Ausnehmung eingreift. Durch diesen Eingriff wird eine Fixierung gewährleistet. Zur Erfindung gehörig wird auch der umgekehrte Fall angesehen, daß der Golfsack mit einer Ausnehmung oder dergleichen versehen ist, in die ein Vorsprung der Auflage eingreift.

Die Unteransprüche kennzeichnen weitere vorteilhafte Ausgestaltungen.

Die Zeichnungen veranschaulichen die Erfindung anhand eines Ausführungsbeispiels und zwar zeigt:
- Figur 1: eine Frontansicht auf einen Golfwagen in voll ausgeklappter Stellung,
- Figur 2: eine Seitenansicht des Golfwagens gemäß Figur 1,
- Figur 3: eine Teilansicht des Golfwagens in ausgeklappter und angedeuteter zusammengeklappter Fahrgestellstellung,
- Figur 4: eine Seitenansicht des unteren Bereichs des Golfwagens in ausgeklappter und zusammengeklappter Stellung des Fahrgestells,
- Figur 5: eine Detailansicht im Bereich eines Radhalteteils des Golfwagens,
- Figur 6: eine Detailansicht einer Klemmeinrichtung einer teleskopartig ausziehbaren Längsstange des Golfwagens,
- Figur 7: eine Detailansicht einer Lagerbrücke mit Verrastung zur Längsstange,
- Figur 8: eine Seitenansicht eines Griffs, teilweise aufgeschnitten,
- Figur 9: eine perspektivische Unteransicht auf den Fußbereich eines Golfsacks des Golfwagens und
- Figur 10: eine Ansicht des Golfwagens in vollständig zugelegter Stellung.

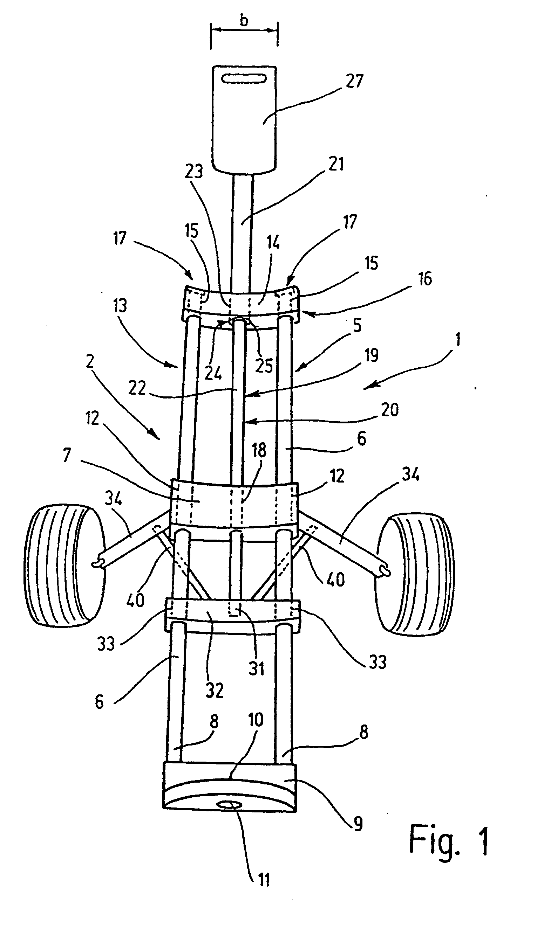

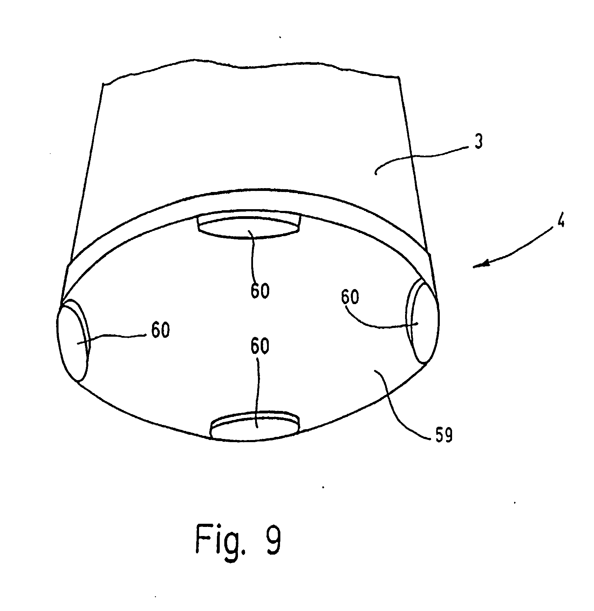

Die Figur 1 zeigt einen Golfwagen 1, der ein zusammenklappbares Fahrgestell 2 aufweist. Zum Golfwagen 1 gehört ferner ein Golfsack 3 (in Figur 1 nicht dargestellt), von dem in der Figur 9 der Fußbereich 4 dargestellt ist.

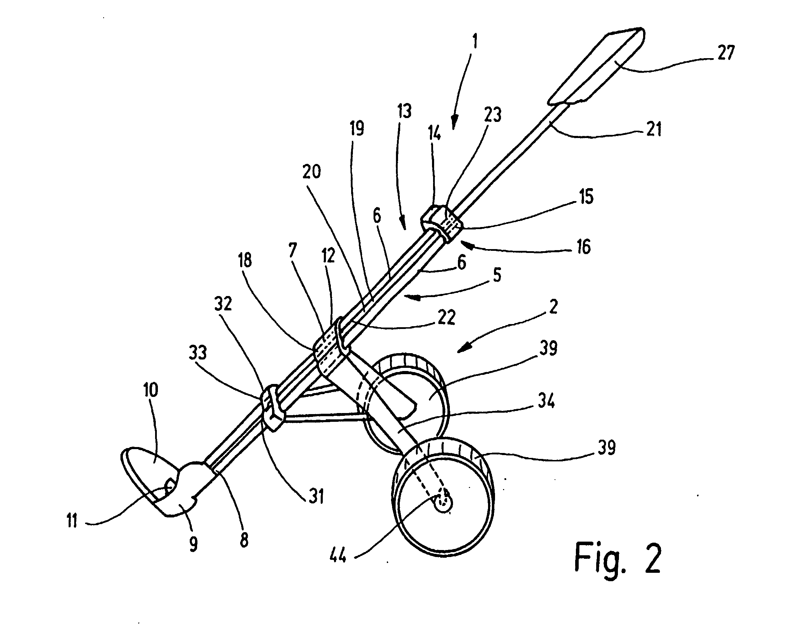

Das Fahrgestell 2 des Golfwagens 1 weist ein Grundteil 5 auf, das aus zwei mit Abstand zueinander parallel verlaufenden Längsträgern 6 und einer Lagerbrücke 7 gebildet ist. Die beiden Längsträger 6 sind als Hohlprofile, insbesondere Aluminiumprofile, vorzugsweise mit ovalem Querschnitt, ausgebildet. Ihre unteren Enden 8 sind mit einer Golfsackhalterung 9 verbunden, die vorzugsweise aus Kunststoff besteht. Die Golfsackhalterung 9 weist eine Auflage 10 auf, die eine Ausnehmung 11 besitzt. Diese Ausnehmung 11 kann als Vertiefung oder aber auch als Durchbruch ausgestaltet sein. Wie der Figur 2 zu entnehmen ist, verläuft die Auflage 10 unter einem Winkel, vorzugsweise einem rechten Winkel, zu der Längserstreckung der Längsträger 6. Die Lagerbrücke 7, die ebenfalls bevorzugt als Kunststoffteil ausgebildet ist, befindet sich etwa im mittigen Bereich, bezogen auf die Längserstreckung der Längsträger 6. Vorzugsweise ist die Lagerbrücke 7 etwas oberhalb der Mitte der Längserstreckung der Längsträger 6 befestigt. Die Längsträger 6 durchgreifen Durchbrüche 12 der Lagerbrücke 7. Im oberen Bereich 13 der Längsträger 6 befindet sich ein Führungsquerjoch 14, das längsverschieblich auf den Längsträgern 6 gelagert ist. Hierzu weist das Führungsquerjoch 14 Durchbrüche 15 auf, die von den Längsträgern 6 durchsetzt werden. Um zu verhindern, daß das Führungsquerjoch 14 über die oberen Enden 16 der Längsträger 6 rutschen kann, sind dort Abschlußelemente 17 an den Längsträgern 6 befestigt, so daß diese einen größeren Querschnitt erhalten und daher ein Passieren der Durchbrüche 15 nicht möglich ist. Das Führungsquerjoch 14 ist grundsätzlich zwischen den Abschlußelementen 17 und der Lagerbrücke 7 auf den Längsträgern 6 verschiebbar.

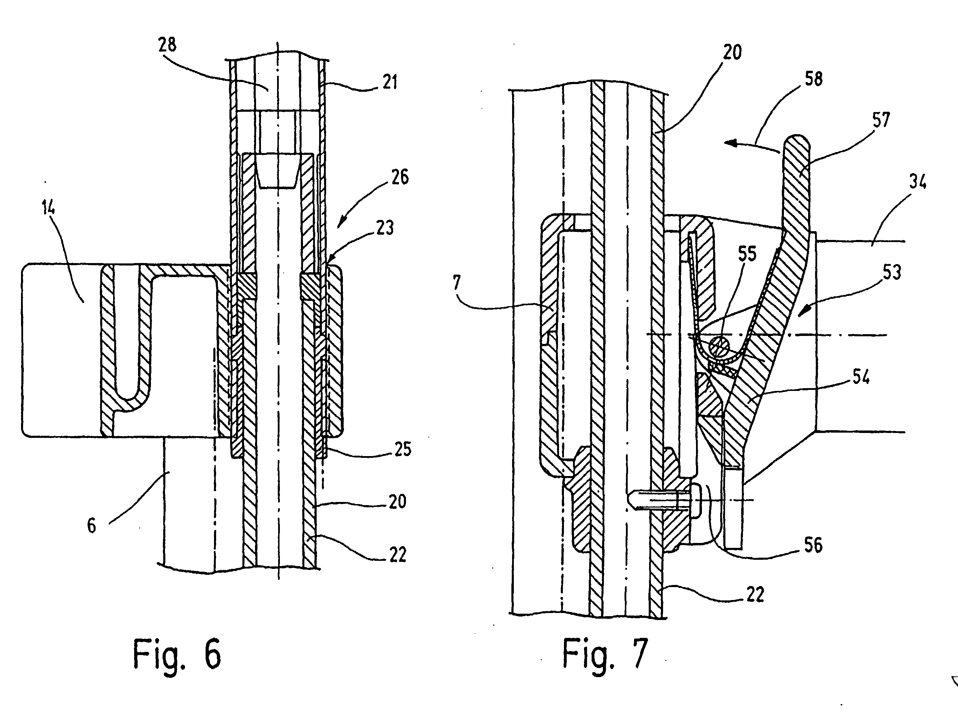

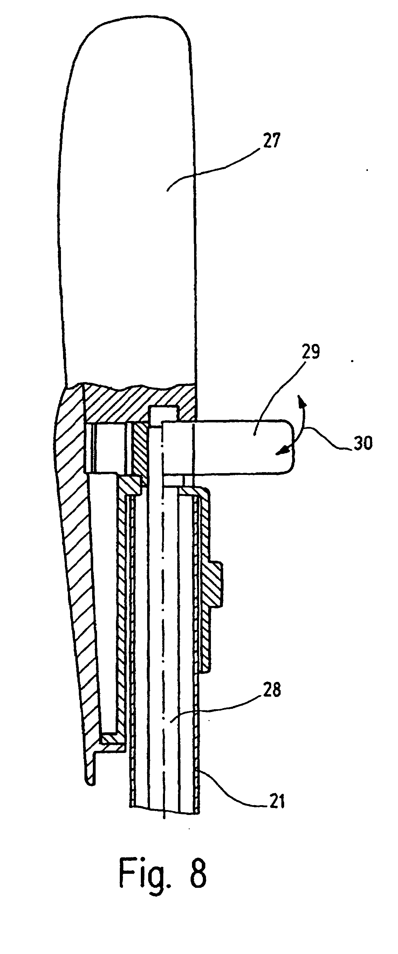

Mittig zwischen den beiden Durchbrüchen 12 der Lagerbrücke 7 befindet sich ein Durchbruch 18, der von einer ein Verschiebeteil 19 bildenden Längsstange 20 durchsetzt wird. Die Längsstange 20 besteht aus einem oberen Teil 21 sowie einem unteren Teil 22, wobei die Teile 21 und 22 teleskopartig ineinandergreifen. Die Durchmesser sind derart gewählt, daß das untere Teil 22 in das obere Teil 21 eingreift. Die Längsstange 20 ist als Hohlprofil, vorzugsweise aus Aluminium, ausgebildet und besitzt einen ovalen Querschnitt. Der obere Teil 21 der Längsstange 20 durchgreift einen Durchbruch 23 des Führungsquerjochs 14, der sich mittig zwischen den beiden Durchbrüchen 15 befindet. Die Querschnittsabmessung des Durchbruchs 23 ist etwas größer als die Querschnittsabmessung des oberen Teils 21, so daß eine Relativverschiebung möglich ist. Am unteren Ende 24 weist das obere Teil 21 der Längsstange 20 eine Verdickung, vorzugsweise einen Ringwulst 25 auf, der den Durchbruch 23 nicht passieren kann. Ferner ist im unteren Bereich des oberen Teils 21 der Längsstange 20 eine Klemmeinrichtung 26 ausgebildet, die sich im Profilinneren befindet. Die Betätigung der Klemmeinrichtung 26 erfolgt mittels einer im Profilinneren bis zu einem Griff 27 verlaufenden Drehstange 28 (Figur 6), wobei am gegenüberliegenden Ende, das heißt im Bereich des Griffs 27 an der Drehstange 28, gemäß der Figur 8, ein Betätigungsvorsprung 29 drehfest angeordnet ist. Durch Verschwenken des Betätigungsvorsprungs 29 gemäß Doppelpfeil 30 in Figur 8, entweder in die Ebene des Griffs 27 hinein oder aus dieser heraus, ist es möglich, die Klemmeinrichtung 26 festzustellen oder zu lösen, wodurch die beiden Teile der Längsstange 20, also oberes und unteres Teil 21 und 22, hinsichtlich der vorliegenden Teleskopauszugsstellung, miteinander fixiert werden oder -beim Lösen- eine Teleskopverschiebung möglich ist. Der Griff 27 ist vorzugsweise als Hohlgriff ausgestaltet, so daß durch Aufklappen, beispielsweise eine Golfballaufnahme realisiert werden kann. Er weist -gemäß Figur 1- eine Breite b auf, die kleiner ist als der lichte Abstand zwischen den beiden Längsträgern 6, so daß er beim Zusammenklappen des Golfwagens 1 zwischen die beiden Langsträger 6 geschoben werden kann. Hierauf wird nachstehend noch näher eingegangen. Der Griff 27 ist vorzugsweise aus Kunststoff hergestellt.

Am unteren Ende 31 des unteren Teils 22 des Längsträgers 6 ist im Bereich zwischen der Lagerbrücke 7 und der Golfsackhalterung 9 ein Querjoch 32 befestigt. Das Querjoch 32 weist zwei Durchbrüche 33 auf, die -mit geringem Spiel- von den Längsträgern 6 durchgriffen werden.

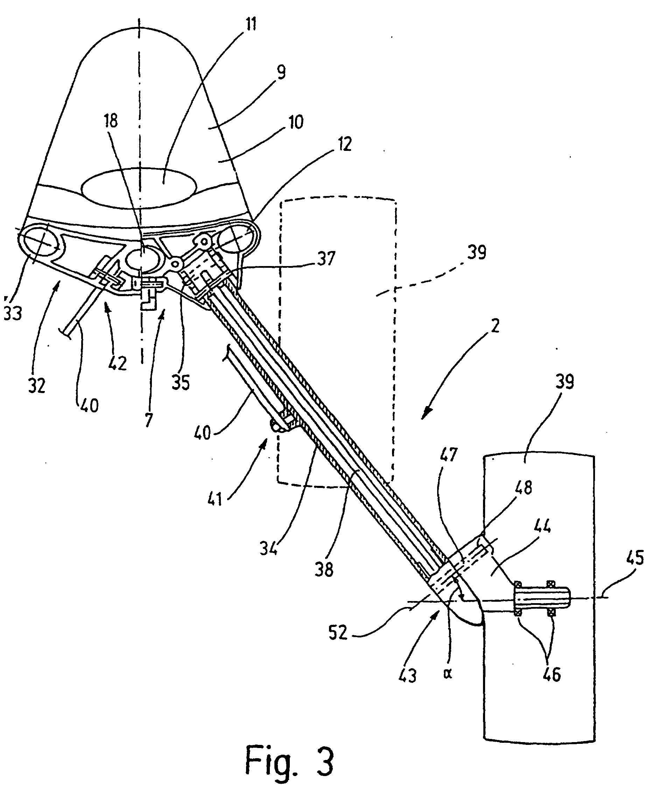

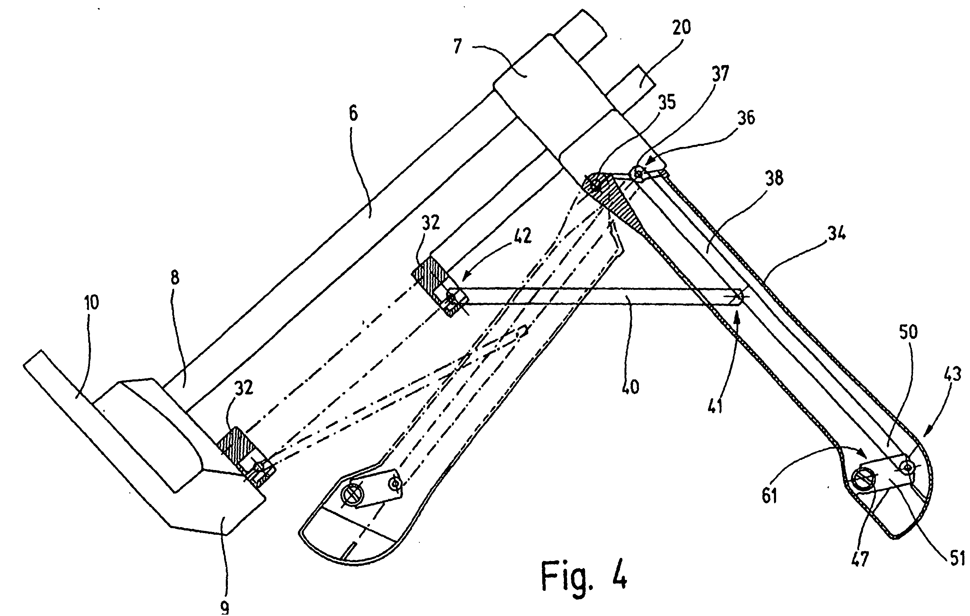

An der Lagerbrücke 7 sind zwei Fahrgestellstreben 34 um Bolzen 35 schwenkbeweglich befestigt. Hierzu wird insbesondere auf die Figuren 3 und 4 verwiesen. Jede Fahrgestellstrebe 34 ist als Hohlprofil ausgebildet. Oberhalb des Bolzens 35 ist eine Lagerstelle 36 an der Lagerbrücke 7 realisiert, die einen Bolzen 37 aufweist, um den ein Steuerlenker 38 schwenkbeweglich gelagert ist. Der Steuerlenker 38 verläuft im Inneren der Fahrgestellstrebe 34. Da der Golfwagen 1 zwei Räder 39 besitzt, sind Fahrgestellstrebe 34, Steuerlenker 38 und auch noch weitere Teile, auf die nachstehend noch näher eingegangen wird, stets zweimal vorhanden. Aus Gründen der Vereinfachung wird nachstehend jedoch nur noch auf eine Ausführung hinsichtlich der Fahrgestellgestaltung für ein Rad 39 eingegangen. Im mittleren Bereich der Fahrgestellstrebe 34 ist ein Ausstelllenker 40 schwenkbeweglich im Bereich seines einen Endes 41 befestigt. Das andere Ende 42 des Ausstellenkers 40 ist schwenkbeweglich am Querjoch 32 angelenkt.

Gemäß Figur 3 ist im unteren Endbereich 43 der Fahrgestellstrebe 34 ein Radhalteteil 44 drehbar befestigt, das eine Radachse 45 aufweist, um die mittels Lager 46 das Rad 39 drehbar gelagert ist, wobei das Rad 39 vom Radhalteteil 44 abnehmbar ist. Vom unteren Endbereich 43 der Fahrgestellstrebe 34 geht ein Stehbolzen 47 aus, der in eine Aufnahmeöffnung 48 des Radhalteteils 44 drehfest eingreift. Gemäß Figur 4 ist das untere Ende 50 des Steuerlenkers 38 schwenkbeweglich mit einem Betätigungsarm 51 verbunden, der drehfest mit dem Stehbolzen 47 gekuppelt ist. Der Betätigungsarm 51 verläuft radial zum Stehbolzen 47. Der Figur 3 ist zu entnehmen, daß die Radachse 45 mit einer Drehachse 52 des Radhalteteils 44 einen spitzen Winkel a einschließt. Die Drehachse 52 entspricht der Mittelachse der kanalartig ausgebildeten Aufnahmeöffnung 48. Die Drehachse 52 entspricht somit auch der Mittelachse des Stehbolzens 47.

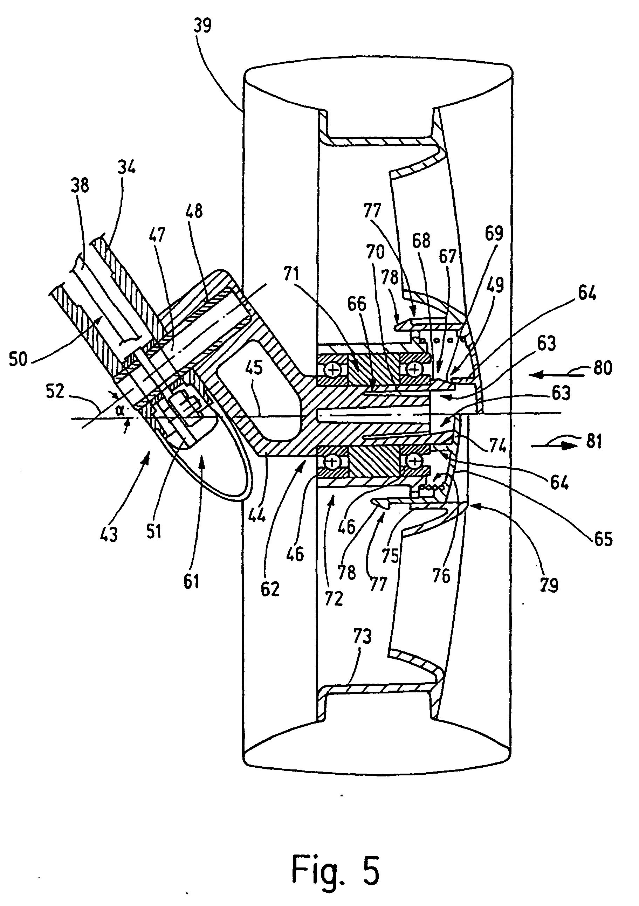

Anhand Figur 5 wird die Abnehmbarkeit des Rads 39 vom Radhalteteil 44 verdeutlicht. Das Radhalteteil 44 besitzt einen Achsstutzen 62, auf dem das Rad 39 -wie bereits erwähnt- mittels der Lager 46 drehbar gelagert ist. Die Lager 46 und eine dazwischenliegende Hülse 71 sind innerhalb einer Nabe 72 einer Felge 73 angeordnet. Zur Realisierung der Abnehmbarkeit ist das Radhalteteil 44 mit einer Rasteinrichtung 49 ausgestattet. Die Rasteinrichtung 49 weist einstückig am Achsstutzen 62 ausgebildete Rastelemente 63 sowie Betätigungsvorsprunge 64 auf, wobei letztere einstückig an einer kappenartigen Achsabdeckung 65 ausgebildet sind. Die Rastelemente 63 gehen mit einem ersten Endbereich 66 von dem Achsstutzen 62 aus und weisen an einem zweiten Endbereich 67 Raststufen 68 auf. Ferner besitzt der zweite Endbereich 67 eine Abschrägung 69. Um eine radiale Beweglichkeit -quer zur Drehachse 45 hinder Raststufen 68 zu ermöglichen, sind am Achsstutzen 62 axial verlaufende Freischnitte 70 vorgesehen, die ein radiales Auslenken der Raststufen 68 nach innen ermöglichen.

Die Achsabdeckung 65 ist als Betätigungseinrichtung 74 ausgebildet. Dazu ist sie innerhalb eines Ringkragens 75 -federbelastet durch eine Schraubendruckfeder 76- in axialer Richtung verschiebbar angeordnet. Ferner weist die Achsabdeckung 65 für ihre unverschiebbare Anbringung Rastvorsprünge 77 auf, die mit dem Ringkragen 75 zusammenwirken. Ferner weisen die Rastvorsprünge 77 Auslenkabschrägungen 78 auf, die bei einem ersten Einsetzen der Achsabdeckung 65 entlang einer Außenkante 79 des Ringkragens 75 unter radialem Einbiegen der Rastvorsprünge 77 gleiten und somit ein Einsetzen der Achsabdeckung 65 erleichtern.

Sollen die Räder 39 vom Achsstutzen 62 abgenommen werden, so drückt hierzu eine Bedienperson die Betätigungseinrichtung 74 in Pfeilrichtung 80 innerhalb des Ringkragens 75 entgegen der Federkraft nieder. Es stellt sich die Position der Betätigungseinrichtung 74 ein, wie sie unterhalb der Drehachse 45 in der Figur 5 dargestellt ist (oberhalb der Drehachse 45 ist die nicht niedergedrückte, also die Radfixierposition der Betätigungseinrichtung 74 gezeigt). Durch das Niederdrükken treffen die Betätigungsvorsprünge 64 auf die Abschrägungen 69 der Rastelemente 63, wodurch die Raststufen 68 radial nach innen bewegt werden. Dadurch geben sie das angrenzende Lager 46 frei, so daß ein Abziehen des Rads 39 in Pfeilrichtung 81 erfolgen kann. Beim Abziehen gleitet zunächst das Lager 46, dann die Hülse 71 und schließlich das zweite Lager 46 über die Raststufen 68 hinweg.

Das Aufstecken des Rads 39 erfolgt in entsprechend umgekehrter Art und Weise.

Die Figur 7 zeigt, daß an der Lagerbrücke 7 eine Verrastung 53 angeordnet ist. Diese weist einen wippenartigen Hebel 54 auf, der -unter Federvorspannung- um einen Bolzen 55 schwenkbeweglich gelagert ist. An dem unteren Teil 22 der Längsstange 20 ist ein Gegenrastelement 56 befestigt. Dies befindet sich hinsichtlich der Längserstreckung des unteren Teils 22 im Bereich zwischen der Lagerbrücke 7 und dem Querjoch 32 und läßt sich -wie die Figur 7 zeigt- mit dem Hebel 54 verrasten. Zur Aufhebung des Rastsitzes ist es lediglich notwendig, das Hebelende 57 gemäß Pfeil 58 niederzudrücken, wodurch das Gegenrastelement 56 freigegeben wird und insofern die Verrastung nicht mehr besteht.

Der Golfsack 3 weist in seinem unteren Bereich eine vorzugsweise als Kunststoffspritzteil ausgebildete Verstärkung 59 auf. Die Standfüße 60 sind als Vorsprünge ausgebildet, wobei sie eine Querschnittsformgebung besitzen, die der Ausnehmung 11 der Auflage 10 der Golfsackhalterung 9 entspricht. Auf diese Art und Weise ist es möglich, beim Aufstellen des Golfsacks 3 auf die Auflage 10 eine Fixierung dadurch zu erzielen, daß einer der Standfüße 60 in die Ausnehmung 11 eingreift, wodurch ein Halt gegen Verrutschen erzielt ist. Die Formgebung von Querjoch 32, Lagerbrücke 7 und Führungsquerjoch 14 ist hinsichtlich der Auflage des Golfsacks 3 derart gestaltet, daß angepaßte Konturen zur Golfsackperipherie vorliegen, so daß eine paßgerechte Aufnahme vorliegt.

Es ergibt sich folgende Funktion:

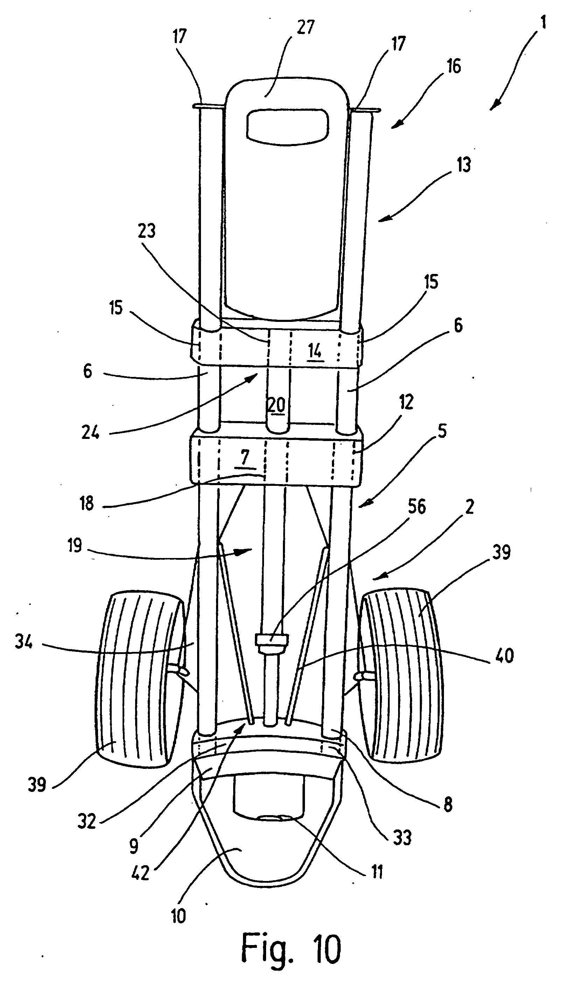

Es wird davon ausgegangen, daß sich der Golfwagen 1 in der vollständig auseinandergefalteten Stellung gemäß der Figuren 1 und 2 befindet. Will jetzt der Benutzer den Golfwagen zusammenlegen, um ihn beispielsweise im Kofferraum seines Kraftfahrzeugs mitzunehmen, so betätigt er den Betätigungsvorsprung 29, so daß die Verklemmung zwischen dem oberen Teil 21 und dem unteren Teil 22 der Längsstange 20 gelöst wird. Er schiebt anschließend den Griff 27 in Richtung auf das Führungsquerjoch 14. Im Zuge des weiteren Zusammenlegens betätigt er nun die Verrastung 53, so daß mittels des Griffs 27 und der Längsstange 20 das Querjoch 32 auf den Längsträgern 6 in Richtung auf die Golfsackhalterung 9 verschoben werden kann. Bei diesem Verschiebevorgang nimmt das Querjoch 32 über die Ausstellenker 40 die Fahrgestellstreben 34 mit, das heißt, diese verschwenken um ihre Bolzen 35 derart, daß sie sich an das Grundteil 5 anlegen, wie dies mit gestrichelter Linie in der Figur 4 dargestellt ist. Durch das Verschwenken der jeweiligen Fahrgestellstrebe 34 erfolgt eine Relativbewegung zwischen der Fahrgestellstrebe 34 und dem Steuerlenker 38 derart, daß der Betätigungsarm 51 um den drehbar gelagerten Stehbolzen 47 verschwenkt wird, das heißt, es wird eine Drehbewegung des Stehbolzens 47 um die Drehachse 52 durchgeführt. Da auf dem Stehbolzen 47 das Radhalteteil 44 drehfest befestigt ist, wird aufgrund dieser Drehbewegung des gesamte Radhalteteil 44 um die Drehachse 52 verdreht, wodurch -gemäß Figur 3- im zusammengelegten Zustand des Golfwagens das zugehörige Rad 39 die gestrichelt eingezeichnete Stellung einnimmt, das heißt, die Ebene des Rads liegt etwa parallel zu der Längserstreckung der Längsträger 6, so daß optimal kleine Querschnittsabmessungen der Gesamtanordnung erzielt werden. Im vollständig zusammengeschobenen Zustand (Figur 10) befindet sich der Griff 27 zwischen den beiden Längsträgern 6, wobei sich seine obere Kante etwa auf Höhe der oberen Enden 16 der Längsträger 6 befindet. Sind trotz der mittels der Exzenterteile 61 ausgeführten Radanlegebewegung -wobei die Exzenterteile 61 von den Betätigungsarmen 51 gebildet sind- dem Benutzer die nunmehr sehr geringen Querschnittsabmessungen nicht ausreichend, ist es möglich die Räder 39 abzunehmen. Dies wird jedoch nur in Ausnahmefällen notwendig sein.

Im nachstehenden soll -der Vollständigkeit halberder umgekehrte Vorgang, nämlich das Auseinanderfalten des Golfwagens 1, kurz beschrieben werden: Der Benutzer wird hierzu den Griff 27 erfassen und die Längsstange 20 relativ zum Grundteil 5 herausziehen. Hierbei wird das Querjoch 32 in Richtung auf die Lagerbrücke 7 bewegt, wobei die Ausstellenker 40 die Fahrgestellstreben 34 vom Grundteil 5 abstellen. Gleichzeitig erfolgt -wie vorstehend bereits beschrieben- eine entsprechende Verdrehung der Radhalteteile 44, so daß die Stellung gemäß der durchgezogenen Linie in der Figur 3 erreicht ist. In der Endstellung verrastet das Gegenrastelement 56 mit dem Hebel 54, so daß die Radausstellstellung fixiert ist. Der Griff 27 kann so weit nach oben gezogen werden, bis der Ringwulst 25 das Führungsquerjoch 14 bis gegen die Abschlußelemente 17 mitgenommen hat, wie dies in der Figur 1 dargestellt ist. Mit dem Betätigungsvorsprung 29 läßt sich die Auszugsstellung der teleskopartig gestalteten Längsstange 20 fixieren.

## Patentansprüche

1. Zusammenlegbarer Golfwagen (1) mit einer, an einem Grundteil (5) angeordneten Golfsackhalterung (9) und mit mindestens zwei am Grundteil (5) schwenkbeweglich gelagerten Fahrgestellstreben (34), an denen Räder (39) gelagert sind, wobei am Grundteil (5) ein Verschiebeteil (19) verschieblich gelagert ist, das eine Längsstange (20) aufweist, an dessen einem Ende ein Griff (27) befestigt ist, wobei am Verschiebeteil (19) mindestens ein Ausstelllenker (40) schwenkbar gelagert ist, der schwenkbeweglich mit mindestens einer der Fahrgestellstreben (34) verbunden ist, **dadurch gekennzeichnet, dass** das Grundteil (5) mindestens zwei Längsträger (6) aufweist, dass im Bereich der oberen Enden (16) der Längsträger (6) ein Führungsquerjoch (14) längsverschieblich auf den Längsträgern (6) und der Längsstange (20) gelagert ist, und dass der Griff (27) eine Breite (b) aufweist, die kleiner ist, als der lichte Abstand zwischen den beiden Längsträgern (6), zwischen denen die Längsstange (20) angeordnet ist.

2. Golfwagen nach Anspruch 1, **dadurch gekennzeichnet, daß** das Verschiebeteil (19) ein am Grundteil (5) geführtes Verlagerungsteil, insbesondere ein Querjoch (32) , aufweist, an dem der Ausstellenker (40) gelagert ist.

3. Golfwagen nach Anspruch 2, **dadurch gekennzeichnet, daß** zur Ausbildung der Führung das Querjoch (32) Durchbrüche (33) aufweist, die von den Längsträgern (6) durchgriffen werden.

4. Golfwagen nach einem der vorhergehenden Ansprüche, **dadurch gekennzeichnet, daß** die Längsträger (6) zueinander parallel verlaufen und daß die Längsstange (20) parallel zu den Längsträgern (6) verläuft.

5. Golfwagen nach einem der vorhergehenden Ansprüche, **dadurch gekennzeichnet, daß** das Grundteil (5) eine Lagerbrücke (7) aufweist, an der die Längsträger (6) befestigt sind und an der die Längsstange (20) verschieblich geführt ist.

6. Golfwagen nach Anspruch 5, **dadurch gekennzeichnet, daß** zur Ausbildung der Führung die Lagerbrücke (7) einen Durchbruch (18) aufweist, der von der Längsstange (20) durchgriffen wird.

7. Golfwagen nach einem der vorhergehenden Ansprüche, **dadurch gekennzeichnet, daß** die Längsträger (6) Abschlußelemente (17) aufweisen, die Anschläge für das Führungsquerjoch (14) bilden.

8. Golfwagen nach einem der vorhergehenden Ansprüche, **dadurch gekennzeichnet, daß** die Längsstange (20) teleskopartig ausziehbar ausgebildet ist.

9. Golfwagen nach einem der vorhergehenden Ansprüche, **dadurch gekennzeichnet, daß** die Längsstange (20) eine Klemmeinrichtung (26) zur Fixierung der Ausziehstellung aufweist.

10. Golfwagen nach einem der vorhergehenden Ansprüche, **gekennzeichnet durch** eine lösbare Verrastung (53) zwischen Längsstange (20) und Lagerbrücke (7).

11. Golfwagen nach einem der vorhergehenden Ansprüche, **dadurch gekennzeichnet, daß** neben der oder innerhalb der Fahrgestellstrebe (34) ein Steuerlenker (38) verläuft, der an dem Grundteil (5) derart schwenkbeweglich befestigt ist, daß seine Lagerstelle (36) nicht mit der Lagerstelle der Fahrgestellstrebe (34) zusammenfällt und der im Bereich des zugehörenden Rads (39) mit einem Exzenterteil (61) zusammenwirkt, welches mit einem drehbar an der Fahrgestellstrebe (34) gelagerten Radhalteteil (44) verbunden ist beziehungsweise dieses aufweist, an dem eine Radachse (45) unter einem Winkel (Ó) zur Drehachse (52) des Radhalteteils (44) angeordnet ist.

12. Golfwagen nach einem der vorhergehenden Ansprüche, **dadurch gekennzeichnet, daß** die Räder (39) lösbar gelagert sind.

13. Golfwagen nach Anspruch 12, **gekennzeichnet durch** eine die Lösbarkeit der Räder (39) ermöglichende Rasteinrichtung (49).

14. Golfwagen nach Anspruch 13, **dadurch gekennzeichnet, daß** die Rasteinrichtung (49) mittels einer vorzugsweise kappenartigen Achsabdeckung (65) betätigbar ist.

15. Golfwagen nach einem der vorhergehenden Ansprüche, **dadurch gekennzeichnet, daß** die Golfsackhalterung (9) eine mit einer Ausnehmung (11) versehene Auflage (10) aufweist und daß der abnehmbare Golfsack (3) mindestens einen Standfuß (60) besitzt, der in die Ausnehmung (11) eingreift.

## Claims

1. Collapsible golf cart (1) comprising a golf bag holding device (9) arranged on a base part (5) and comprising at least two chassis struts (34), pivotally mounted on the base part (5) and on which wheels (39) are mounted, a sliding part (19) being displaceably mounted on the base part (5) and having a longitudinal rod (20) to one end of which a handle (27) is fastened, at least one hinged connecting rod (40) being pivotally mounted on the sliding part (19) and being pivotally connected to at least one of the chassis struts (34), **characterised in that** the base part (5) has at least two longitudinal supports (6), **in that** in the region of the upper ends (16) of the longitudinal supports (6) a transverse guide yoke (14) is longitudinally displaceably mounted on the longitudinal supports (6) and the longitudinal rod (20), and **in that** the handle (27) has a width (b) which is smaller than the internal spacing between the two longitudinal supports (6) between which the longitudinal rod (20) is arranged.

2. Golf cart according to claim 1, **characterised in that** the sliding part (19) has a displacement part guided on the base part (5), in particular a transverse yoke (32), on which the hinged connecting rod (40) is mounted.

3. Golf cart according to claim 2, **characterised in that** to form the guide, the transverse yoke (32) comprises apertures (33) which are penetrated by the longitudinal supports (6).

4. Golf cart according to any of the preceding claims, **characterised in that** the longitudinal supports (6) run parallel to one another and **in that** the longitudinal rod (20) runs parallel to the longitudinal supports (6).

5. Golf cart according to any of the preceding claims, **characterised in that** the base part (5) comprises a end bracket (7) to which the longitudinal supports (6) are fastened and on which the longitudinal rod (20) is displaceably guided.

6. Golf cart according to claim 5, **characterised in that** to form the guide, the end bracket (7) has an aperture (18) which is penetrated by the longitudinal rod (20).

7. Golf cart according to any of the preceding claims, **characterised in that** the longitudinal supports (6) have terminal elements (17) forming stops for the transverse guide yoke (14).

8. Golf cart according to any of the preceding claims, **characterised in that** the longitudinal rod (20) is constructed so as to be telescopically extendable.

9. Golf cart according to any of the preceding claims, **characterised in that** the longitudinal rod (20) has a clamping device (26) for fixing the drawn-out position.

10. Golf cart according to any of the preceding claims, **characterised by** a detachable latch (53) between longitudinal rod (20) and end bracket (7).

11. Golf cart according to any of the preceding claims, **characterised in that** a hinge rod (38) runs next to or inside the chassis strut (34) and is pivotally fastened to the base part (5) in such a way that its bearing (36) does not coincide with the bearing position of the chassis strut (34) and cooperates in the region of the associated wheel (39) with an eccentric part (61) which is connected to a wheel holding part (44) rotatably mounted on the chassis strut (34) or comprises this wheel holding part (44) on which a wheel axis (45) is arranged at an angle (O) to the axis of rotation (52) of the wheel holding part (44).

12. Golf cart according to any of the preceding claims, **characterised in that** the wheels (39) are detachably mounted.

13. Golf cart according to claim 12, **characterised by** a latching device (49) allowing detachability of the wheels (39).

14. Golf cart according to claim 13, **characterised in that** the latching device (49) can be actuated by means of a, preferably cap-like, axle covering (65).

15. Golf cart according to any of the preceding claims, **characterised in that** the golf bag holding device (9) comprises a support (10) provided with a recess (11), and **in that** the removable golf bag (3) has at least one foot (60) which engages in the recess (11).

## Revendications

1. Chariot de golf (1) pliable, comprenant un support pour sac de golf (9), agencé au niveau d'une partie de base (5), et au moins deux entretoises de châssis (34), logées de manière pivotante au niveau de la partie de base (5) et sur lesquelles sont logées des roues (39), une pièce coulissante (19) étant logée de manière coulissante au niveau de la partie de base (5) et comportant une tige longitudinale (20) à l'extrémité de laquelle est fixée une poignée (27), au moins un bras de projection (40) étant logé de manière pivotante au niveau de la pièce coulissante (19) et étant assemblé avec au moins une des entretoises de châssis (34), **caractérisé en ce que** la partie de base (5) comporte au moins deux supports longitudinaux (6), **en ce que**, dans la zone des extrémités supérieures (16) des supports longitudinaux (6), une traverse de guidage (14) est logée de manière coulissante longitudinalement sur les supports longitudinaux (6) et la tige longitudinale (20), et **en ce que** la poignée (27) a une largeur (b) qui est inférieure à la distance intérieure entre les deux supports longitudinaux (6) entre lesquels est agencée la tige longitudinale (20).

2. Chariot de golf selon la revendication 1, **caractérisé en ce que** la pièce coulissante (19) comporte une pièce mobile, en particulier une traverse (32), qui est guidée sur la partie de base (5) et sur laquelle est logé le bras de projection (40).

3. Chariot de golf selon la revendication 2, **caractérisé en ce que**, pour pouvoir guider la traverse (32), celle-ci comporte des passages (33) à travers lesquels passent les supports longitudinaux (6).

4. Chariot de golf selon une des revendications précédentes, **caractérisé en ce que** les supports longitudinaux (6) sont parallèles entre eux et **en ce que** la tige longitudinale (20) est parallèle aux supports longitudinaux (6).

5. Chariot de golf selon une des revendications précédentes, **caractérisé en ce que** la partie de base (5) comporte une passerelle d'appui (7), sur laquelle sont fixés les supports longitudinaux (6) et sur laquelle la tige longitudinale (20) est guidée de manière coulissante.

6. Chariot de golf selon la revendication 5, **caractérisé en ce que**, pour pouvoir guider la passerelle d'appui (7), celle-ci comporte un passage (18) à travers lequel passe la tige longitudinale (20).

7. Chariot de golf selon une des revendications précédentes, **caractérisé en ce que** les supports longitudinaux (6) comportent des éléments d'extrémité (17), qui forment des butées pour la traverse de guidage (14).

8. Chariot de golf selon une des revendications précédentes, **caractérisé en ce que** la tige longitudinale (20) est extractible de manière télescopique.

9. Chariot de golf selon une des revendications précédentes, **caractérisé en ce que** la tige longitudinale (20) comporte un dispositif de blocage (26) destiné à bloquer la position d'extraction.

10. Chariot de golf selon une des revendications précédentes, **caractérisé par** un élément de verrouillage (53) amovible entre la tige longitudinale (20) et la passerelle d'appui (7).

11. Chariot de golf selon une des revendications précédentes, **caractérisé en ce qu'**un levier de commande (38) s'étend à côté ou à l'intérieur des entretoises de châssis (34), lequel est fixé de manière pivotante sur la partie de base (5) de telle sorte que son point d'appui (36) ne coïncide pas avec le point d'appui des entretoises de châssis (34) et lequel, dans la zone de la roue (39) correspondante, coopère avec un excentrique (61), qui est assemblé avec un porte-roue (44) logé de manière rotative au niveau de l'entretoise de châssis (34) ou est muni dudit porte-roue, au niveau duquel est agencé un essieu (45) en formant un angle (O) avec l'axe de rotation (52) du porte-roue (44).

12. Chariot de golf selon une des revendications précédentes, **caractérisé en ce que** les roues (39) sont logées de manière amovible.

13. Chariot de golf selon la revendication 12, **caractérisé par** un organe d'arrêt (49) permettant l'amovibilité des roues (39).

14. Chariot de golf selon la revendication 13, **caractérisé en ce que** l'organe d'arrêt (49) peut être actionné au moyen d'un cache pour essieu (65), de préférence en forme de calotte.

15. Chariot de golf selon une des revendications précédentes, **caractérisé en ce que** le support pour sac de golf (9) comporte un appui (10) muni d'un évidement (11) et **en ce que** le sac de golf (3) amovible comporte au moins une béquille (60) qui s'engage dans l'évidement (11).
